# EUROPÄISCHE PATENTSCHRIFT

(11) **EP 1 447 544 B1**
(45) Veröffentlichungstag und Bekanntmachung des Hinweises auf die Patenterteilung: **30.11.2005**
(21) Anmeldenummer: 04090011.0
(22) Anmeldetag: 15.01.2004
(51) Int. Cl.: F02C 9/28

(54) **Fehlerdetektionslogik für Triebwerke**
Failure detection logic for gas turbine engines
Logique de détection d'erreur pour une turbine à gaz

(30) Priorität: 21.01.2003 DE 10302074
(43) Veröffentlichungstag der Anmeldung: 18.08.2004
(73) Patentinhaber: Rolls-Royce Deutschland Ltd & Co KG, 15827 Dahlewitz (DE)
(72) Erfinder: Mangelsdorf, Torsten, 12161 Berlin (DE)
(74) Vertreter: Wablat, Wolfgang

(56) Entgegenhaltungen:
- US-A- 4 249 238
- US-A- 4 344 141
- US-A- 4 454 754
- US-A- 4 507 915
- US-A- 4 794 755
- US-A- 4 817 046

## Beschreibung

Die Erfindung betrifft eine Fehlerdetektionslogik für ein Regelsystem von Triebwerken zum Erfassen des Verlustes der Schubregelungsfähigkeit des Regelkreises. In der US4 454 754 A wird eine Fehler detektions logik zum Erkennen von Triebwerksstörungen beschrieben.

Die Schubregelung von Triebwerken und damit auch die Regelung des für den jeweiligen Schub erforderlichen Kraftstoffflusses erfolgt bei einem bekannten Regelsystem auf der Grundlage des am Eingang und am Ausgang des Triebwerkes gemessenen Druckes als primärem Regelparameter und des daraus gebildeten Triebwerksdruckverhältnisses. Eine positive Differenz zwischen dem Sollwert des Druckverhältnisses und dem Istwert des Druckverhältnisses weist dabei auf eine beabsichtigte Beschleunigung des Triebwerks und dementsprechend auf eine erhöhte Kraftstoffzufuhr hin, während bei beabsichtigter Verzögerung des Triebwerkes und entsprechend verringerter Kraftstoffzufuhr die Differenz zwischen dem Soll- und dem Istwert des Triebwerksdruckverhältnisses einen negativen Wert darstellt. Ein anderer primärer Regelparameter ist die Niederdruckwellenzahl.

Um den jeweils erforderlichen Schub mit einem möglichst geringen Fehler zu erreichen und zu gewährleisten, ist die Kraftstoffdosiereinheit (FMU: fuel metering unit), über die der Brennkammer des Triebwerks die dem jeweils erforderlichen Schub entsprechende Kraftstoffmenge zugeführt wird, um Bewegung und Geschwindigkeit eines mit dem Triebwerk verbundenen Körpers in der gewünschten Weise und mit einem minimalen Fehler zu beeinflussen, ein extrem sicherheitsrelevantes Bauteil.

Zum Erkennen von Fehlern und zum Erfassen von Betriebszuständen ist in das Triebwerk ein elektronisches Regelsystem (EEC: electronic engine controller) integriert. Die entsprechende Fehlerdetektionslogik ist in der Lage, einzelne Fehlfunktionen, zum Beispiel - in Bezug auf die Kraftstoffdosiereinheit - den Defekt einer der in diese eingebauten Spulen zur Regelung des Kraftstoffflusses oder das Fehlen eines Feedbacksignals zwischen der Kraftstoffdosiereinheit und dem elektronischen Regelsystem, zu erfassen. Sobald die Fehlerdetektionslogik einen Fehler feststellt, kann die Detektion aufgrund der Redundanz des Systems in einem anderen Kanal wiederholt werden. Sofern der zuvor detektierte Fehler auch in dem zweiten Kanal festgestellt wird, werden entsprechende Maßnahmen zur Behebung des Fehlers getroffen bzw. das Triebwerk wird abgeschaltet.

In bestimmten Fällen, beispielsweise wenn sich die Spannungsverhältnisse in dem Spulensystem der Kraftstoffdosiereinheit aufgrund einer unzureichenden Spannungszufuhr durch Fehler in der Anschlussleitung, den Steckern und dgl. ändern, kann die Fehlerdetektionslogik die dadurch bedingte Änderung des Kraftstoffflusses nicht erfassen. Das äußert sich in einem dem vorgegebenen Sollwert nicht folgenden Istwert des Schubes und Triebwerksdruckverhältnisses, der von der Fehlerdetektionslogik nicht als Fehler erkannt wird. Das heißt, bei dieser Art der Regelung mit einem primären Regelparameter, hier dem Triebwerksdruckverhältnis, wird ein nicht dem vorgegebenen Sollwert entsprechender, zu hoher oder zu geringer Schub nicht erfasst. Ein aufgrund dieses Regelverhaltens, das heißt, einem Verlust der Schubregelungsfähigkeit, nicht reagierendes Triebwerk ohne Reaktion des Triebwerkreglers oder ohne Anzeige des Fehlverhaltens kann katastrophale Folgen haben. Beispielsweise bei einem Startlauf kann ein Flugzeug, das mit einem nach dem geschilderten Stand der Technik geregelten Triebwerk angetrieben wird, durch einen von dem Regelsystem nicht erkannten zu hohen Schub über das Ende der Startbahn hinausschießen oder durch einen asymmetrischen Schub der beiden Triebwerke von der Startbahn abkommen. Ein nicht erkannter zu hoher Schub in einem der beiden Triebwerke ist insbesondere auch kurz vor der Landung kritisch, da der dadurch bedingte asymmetrische Schub ebenfalls zum Verlassen der Landebahn führen kann. Man spricht in diesem Fall von einem Verlust der Schubregelungsfähigkeit (LOTC: loss of thrust control), bei dem eine nicht dem vorgegebenen Sollwert entsprechende Kraftstoffmenge in die Brennkammer des Triebwerkes gefördert wird. Da das Fehlerdetektionssystem diesen Fehler jedoch nicht erkennt, kann es zu den oben beschriebenen katastrophalen Folgen kommen. Grundsätzlich kann ein Verlust der Schubregelungsfähigkeit während des gesamten Fluges auftreten, nur dass die zuvor geschilderten Fälle in ihren Folgen dramatischer sind als zum Beispiel in großer Flughöhe.

Der Erfindung liegt daher die Aufgabe zugrunde, eine Fehlerdetektionslogik für ein Regelungssystem von Triebwerken so auszubilden, dass ein Verlust der Schubregelungsfähigkeit sicher erkannt wird.

Erfindungsgemäß wird die Aufgabe mit einem Verfahren gemäß der im Patentanspruch 1 wiedergegebenen Fehlerdetektionslogik gelöst. Aus den Unteransprüchen ergeben sich weitere Merkmale und vorteilhafte Weiterbildungen der Erfindung.

Der Grundgedanke der Erfindung besteht mit anderen Worten in einem Verfahren, wonach zunächst ein erster Regelparameter mit einem entsprechend einer meter mit einem entsprechend einer Beschleunigung oder Verzögerung negativen oder positiven Vorzeichen ermittelt und daraus auf die jeweilige Schubregelung geschlossen wird. Da diese Aussage jedoch einen Triebwerksfehler, zum Beispiel im Zusammenhang mit dem Stromanschluss des Kraftstoffdosierventils, unberücksichtigt lässt und ein dadurch bedingter Verlust der Schubregelungsfähigkeit nicht erkannt wird, wird ein zweiter schubabhängiger positiver oder negativer Regelparameter ermittelt und festgestellt. Wenn in einer Logikabfrage festgestellt wird, dass die ermittelten Parameterwerte gleichzeitig jeweils einen vorgegebenen Schwellwert überschreiten, ist eine mit dem zweiten Regelparameter festgestellte nicht reagierende positive oder negative Beschleunigung bei gleichzeitiger eindeutiger Abweichung des Solltriebwerksdruckverhältnisses vom Ist-Triebwerksdruck-verhältnis ein eindeutiger Hinweis auf einen Verlust der Schubregelungsfähigkeit und löst ein Umschalten auf einen zweiten Kanal des redundanten Systems und/oder ein Alarmsignal aus. Als erster Regelparameter wird die Differenz aus dem Soll- und dem Istwert des Triebwerksdruckverhältnisses, die entsprechend einer beabsichtigten Beschleunigung oder Verzögerung entweder positiv oder negativ ist, benutzt. Als zweiter Regelparameter kann die positive oder negative Beschleunigung einer Triebwerkswelle eingesetzt werden. Mit diesem Verfahren ist sichergestellt, dass ein Verlust der Schubregelungsfähigkeit angezeigt wird. Das Verfahren vermeidet eine fälschliche Fehlerdetektion aufgrund des Signalrauschens und sieht zudem Maßnahmen zum Verhindern einer irrtümlichen Anzeige des Verlusts der Schubregelungsfähigkeit infolge eines Triebwerkpumpens vor.

Ein Ausführungsbeispiel der Erfindung wird anhand der Zeichnung näher erläutert. Es zeigen:
- Fig. 1: ein logisches Fließdiagramm zur Ermittlung einer vom Sollwert abweichenden zu geringen Schubkraft (Underthrust-Detektion - UTDET) bei beabsichtigter Beschleunigung; und
- Fig. 2: ein logisches Fließdiagramm zur Ermittlung einer vom Sollwert abweichenden zu hohen Schubkraft (Overthrust-Detektion - OTDET) bei beabsichtigter Verzögerung.

Mit dem Begriff "Underthrust" wird hier ein geringerer Schub als die vom Piloten mit dem Schubhebel eingestellte Schubkraft bezeichnet, während umgekehrt "Overthrust" ein höherer Schub als gefordert ist. Overthrust und Underthrust sind durch einen Fehler im Regelsystem bedingt und stellen einen Verlust der Schubregelungsfähigkeit (LOTC - loss of thrust control) dar, die erkannt und angezeigt werden muss und auf die das Regelsystem entsprechend reagieren muss.

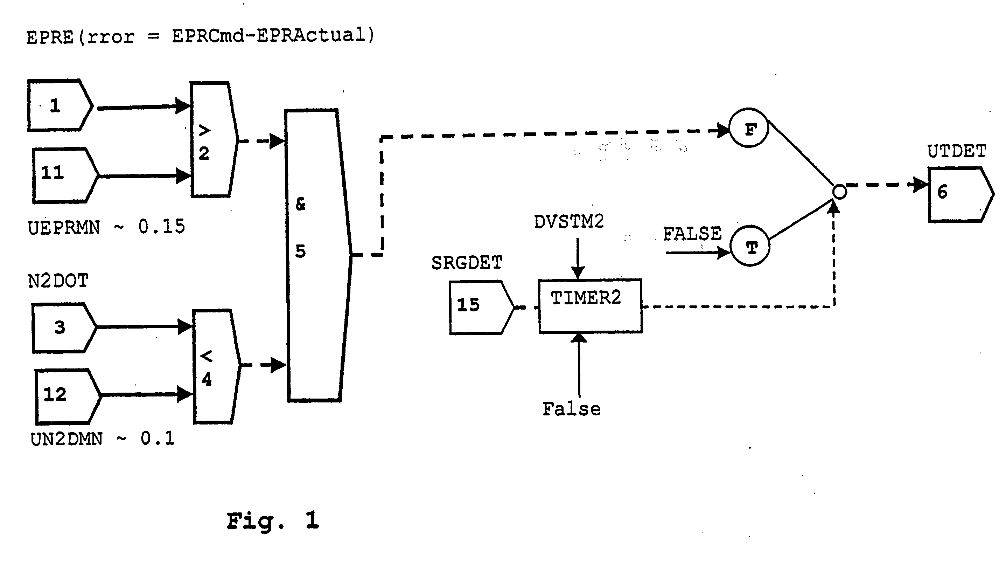

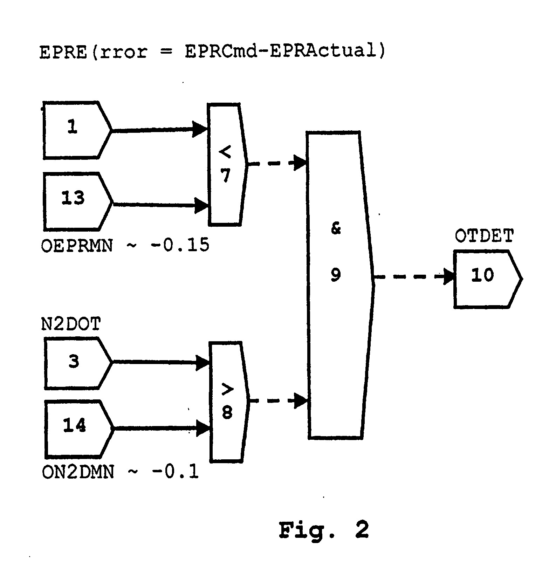

Gemäß Fig. 1 und Fig. 2 wird aus dem Istwert EPRactual des Triebwerksdruckverhältnisses EPR (engine pressure ratio) zwischen dem Ausgang und dem Eingang des Triebwerkes als Maß für den Schub und dem eingegebenen Sollwert EPRcmd als Maß für den gewünschten Schub in Schritt 1 die Differenz +/-EPRerror zwischen dem Sollwert und dem Istwert - als erstem Regelparameter - ermittelt. Wenn die Differenz positiv ist, wird der Brennkammer des Triebwerks über eine Kraftstoffdosiereinheit (nicht dargestellt) mehr Kraftstoff zugeführt und das Triebwerk beschleunigt. Ein negativer Wert der Differenz bedeutet hingegen eine Kraftstoffdrosselung und damit eine Verzögerung (negative Beschleunigung, Schubverringerung). Eine deutliche Abweichung +/-EPRerror,schwell zwischen dem Ist- und dem Sollwert des Triebwerksdruckverhältnisses wird in Schritt 2 (beabsichtigte Beschleunigung gemäß Fig. 1) bzw. Schritt 7 (beabsichtigte Verzögerung gemäß Fig. 2) in einem Logikbaustein festgestellt.

In Schritt 3 (gemäß Fig. 1 und 2) wird mit der Beschleunigung oder Verzögerung +/-N2dot der Hochdruckwelle des Triebwerks ein ebenfalls die Beschleunigung oder Verzögerung des Triebwerks kennzeichnender zweiter Regelparameter ermittelt und in den Schritten 4 bzw. 8 in einem Logikbaustein mit einem vorgegebenen Schwellwert +/-N2dot,schwell der positiven bzw. negativen Beschleunigung der Hochdruckwelle verglichen.

Mit einer Logikabfrage gemäß den Schritten 5 und 9 wird festgestellt, ob die beiden Parameter EPRerror und N2dot gleichzeitig die vorgegebenen Schwellwerte übersteigen.

Wenn gemäß Fig. 1 für eine beabsichtigte Beschleunigung beide Bedingungen der Logikabfrage 5 erfüllt sind, das heißt mit
EPRerror > EPRerror,schwell und N2dot < N2dot,schwell, wobei im vorliegenden Ausführungsbeispiel
EPRerror, schwell = + 0,15 und N2dot, schwell = +0,1 %/sec ist,
die Differenz des Triebwerksdruckverhältnisses den vorgegebenen Schwellwert ueberschreitet und die Beschleunigung der Hochdruckwelle den vorgegebenen Schwellwert gleichzeitig unterschreitet, kommt das Triebwerk tatsächlich der beabsichtigten Beschleunigung nicht nach. Sofern in Schritt 15 auch kein Triebwerkspumpen festgestellt wird, liegt somit eine Underthrust-Situation, das heißt, ein bei beabsichtigter Beschleunigung zu geringer Schub, vor. Diese Underthrust-Situation (UTDET) wird in Schritt 6 angezeigt.

Wenn andererseits bei einer beabsichtigten Verzögerung gemäß Fig. 2 beide Bedingungen der Logikabfrage 9 erfüllt sind, das heißt,
EPRerror < EPRerror,schwell und N2dot > N2dot, schwell, wobei im vorliegenden Ausführungsbeispiel
EPRerror,schwell = -0,15 und N2dot,schwell = -0,1%sec,
kommt das Triebwerk der beabsichtigten Verzögerung nicht nach. Somit liegt eine Overthrust-Situation, das heißt, eine bei beabsichtigter Verzögerung zu hohe Schubkraft, vor. Dieser Zustand wird gemäß Fig. 2 in Schritt 10 (OTDET = Overthrust-Situation) angezeigt.

Somit kann bei einer beabsichtigten Beschleunigung oder Verzögerung des Triebwerks ein Verlust der Schubregelungsfähigkeit, beispielsweise aufgrund eines nicht erkannten Defekts am Kraftstoffdosierventil, sicher angezeigt werden, auf den das Regelsystem reagiert, um nachteilige Folgen aufgrund eines der beabsichtigten positiven oder negativen Beschleunigung nicht entsprechenden - tatsächlichen - Schubes des betreffenden Triebwerkes zu verhindern. Mit der Anzeige in Schritt 6 und 10 wird im Ergebnis der Logikabfrage nach Schritt 5 und 9 durch ein Signal dargestellt, ob ein Verlust der Schubregelungsfähigkeit des Regelsystems besteht, wobei das redundante Regelsystem gegebenenfalls auf einen anderen Kanal umgeschaltet wird bzw. das Triebwerk bei einem auch in diesem Kanal festgestellten Verlust der Schubregelungsfähigkeit abgeschaltet wird.

Die gemäß Fig. 1 in den Schritten 11 bzw. 12 zur Ermittlung einer zu geringen Schubkraft (Underthrust) und gemäß Fig. 2 in den Schritten 13 und 14 eingegebenen Schwellwerte EPRerror,schwell und N2dot,schwell sind in der Zeichnung mit -UEPRMN und -UN2DMN bzw. +OEPRMN und +ON2DMN bezeichnet und sind so vorgegeben, dass sie eine Underthrust-Detektionsgrenze bzw. eine Overthrust-Detektionsgrenze (Schwellwert) zur Vermeidung von durch Signalrauschen bedingten Störungen darstellen.

Darüber hinaus wird mit dem gleichzeitig in die Fehlerdetektionslogik eingebundenen Schritt 15 verhindert, dass die getroffene Aussage über die Schubregelung bzw. den Verlust der Schubregelungsfähigkeit unter bestimmten Bedingungen, das heißt, wenn ein Pumpen des Triebwerks detektiert wird (SRGDET), verfälscht wird.

Bei einer durch das sogenannte Triebwerkspumpen in Schritt 15 festgestellten Störung, bei der beide Bedingungen der Logikabfrage 5 erfüllt sind, jedoch tatsächlich keinen Verlust der Schubregelungsfähigkeit darstellen, wird das Ergebnis der Logikabfrage 5 mit einem Timer und über einen Schalter für eine bestimmte Zeit auf "False" gesetzt, um aufgrund des Triebwerkspumpens nicht fälschlich einen Verlust der Schubregelungsfähigkeit und eine Underthrust-Situation anzuzeigen.

### Aufstellung der verwendeten Abkürzungen

- EPR: Triebwerkdruckverhältnis
- EPRcmd: Sollwert des Triebwerkdruckverhältnisses
- EPRactual: Istwert des Triebwerksdruckverhältnisses
- EPRerror: EPRcmd - EPRactual (erster Regelparameter)
- N2dot: Beschleunigung der Hochdruckwelle (zweiter Regelparameter)
- N2dot,schwell: Schwellwert der Beschleunigung der Hochdruckwelle (UN2DMN, ON2DMN)
- EPRerror,schwell: Schwellwert des Triebwerksdruckwerksdruckverhältnisses (UEPRMN, OEPRMN)
- UTDET: Underthrust-Detektion
- OTDET: Overthrust-Detektion
- SRGDET: Detektion des Triebwerkspumpens
- LOTC: Verlust der Schubregelungsfähigkeit
- EEC: elektronisches Regelsystem

## Patentansprüche

1. Fehlerdetektionslogik für ein Regelsystem eines Triebwerks zum Erfassen eines Verlustes der Schubregelungsfähigkeit, bei dem bei beabsichtigter positiver oder negativer Beschleunigung eine zu geringe oder zu hohe Schubkraft erzeugt wird, wobei
- als erster Regelparameter eine positive oder negative Differenz (EPR error) zwischen dem Soll- und dem Istwert des Triebwerksdruckverhältnisses festgestellt wird, und
- ein bestimmter Schwellwert (OEPRMN, UEPRMN) der Differenz (EPR error) festgelegt und
- die Differenz (EPR error) mit dem Schwellwert (OEPRMN, UEPRMN)verglichen wird; und
- die Beschleunigung oder Verzögerung einer Hochdruckwelle des Triebwerks als zweiter Regelparameter (N2dot) gemessen wird und
- ein bestimmter Schwellwert (ON2DMN, UN2DMN) des zweiten Regelparameters (N2dot) festgelegt wird und
- dieser Schwellwert mit dem triebwerksabhängigen zweiten Regelparameter (N2dot) verglichen wird; wobei zur Vermeidung einer fälschlichen Fehlerdetektion
- die Schwellwerte ( OEPRMN, UEPRMN, ON2DMN, UN2DMN) zur Vermeidung von durch Signalrauschen bedingten Störungen auf eine bestimmte Größe begrenzt sind; und
- ein Triebwerkspumpen detektiert und ein **dadurch** bedingtes Messergebnis eliminiert wird; und
- bei Überschreiten des Schwellwertes des ersten oder zweiten Regelparameters und gleichzeitigem Unterschreiten des Schwellwertes des jeweils anderen Regelparameters ein Verlust der Schubregelungsfähigkeit signalisiert wird.

2. Fehlerdetektionslogik nach Anspruch 1, **dadurch gekennzeichnet, dass** der Schwellwert des Fehlers des Triebwerksdruckverhältnisses etwa + bzw. -0,15 und der Schwellwert der Beschleunigung der hochdruckwelle als zweitem Regelparameter etwa + bzw. -0,1%/sec beträgt, wobei EPRerror > 0,15 und eine gleichzeitig festgestellte N2dot < 0,1%/sec einen zu geringen Schub bei beabsichtigter Beschleunigung und EPRerror < -0,15 und eine gleichzeitig festgestellte N2dot > -0,1% einen zu großen Schub bei beabsichtigter Verzögerung detektieren.

3. Fehlerdetektionslogik nach Anspruch 1, **dadurch gekennzeichnet, dass** bei einer Detektion eines Triebwerkspumpens (SRGDET) das Ergebnis des gleichzeitigen Vergleichs der ersten und zweiten Regelparameter mit dem zugehörigen Schwellwert mit einem Logikargument "False" überschrieben wird, um eine durch Triebwerkspumpen bedingte Störung der Detektion des Verlusts der Schubregelungsfähigkeit zu vermeiden.

## Claims

1. Failure detection logic for an engine controller for the detection of a loss of thrust control resulting in too low or too high a thrust for an intended positive or negative acceleration, respectively, with
- a positive or negative difference (EPRerror) between the command value and the actual value of the engine pressure ratio being established as first control parameter, and
- a certain threshold (OEPRMN, UEPRMN) of the difference (EPRerror) being determined, and
- the difference (EPRerror) being compared with the threshold (OEPRMN, UEPRMN), and
- the acceleration or deceleration of a high-pressure shaft of the engine being measured as second control parameter (N2dot), and
- a certain threshold (ON2DMN, UN2DMN) of the second control parameter (N2dot) being determined, and
- this threshold being compared with the engine-dependent second control parameter (N2dot), and - in order to avoid false failure detection -
- the thresholds (OEPRMN, UEPRMN, ON2DMN, UN2DMN) being limited to a certain value to avoid signal noise, and
- engine surge being detected and a resulting measuring result being eliminated, and
- a loss of thrust control being indicated in case of overshooting the threshold of the first or second control parameter and simultaneous undershooting the threshold of the other control parameter.

2. Failure detection logic in accordance with Claim 1**, characterized in that** the threshold of the error of the engine pressure ratio is approx. + or -0.15, respectively, and the threshold of the acceleration of the high-pressure shaft as second control parameter is approx. + or - 0.1 %/sec, respectively, with EPRerror > 0.15 and a simultaneously established N2dot < 0.1%/sec identifying an underthrust situation for a intended acceleration and with EPRerror < -0.15 and a simultaneously established N2dot > -0.1%/sec identifying an overthrust situation for a intended deceleration.

3. Failure detection logic in accordance with Claim 1, **characterized in that** the result of the simultaneous comparison of the first and the second control parameter with the respective threshold is overwritten with the logic argument "false" if engine surge is detected (SRGDET) in order to prevent the detection of loss of thrust control caused by engine surge being disturbed.

## Revendications

1. Logique de détection d'erreurs pour un système de régulation d'un moteur, destinée à enregistrer la perte de la capacité de régulation de la poussée, et sur lequel une poussée trop faible ou trop élevée est créée lors d'une accélération intentionnelle positive ou négative, sachant
- qu'une différence positive ou négative (EPR error) entre les valeurs théorique et effective du rapport de pression dans le moteur est définie comme premier paramètre de régulation, et
- qu'une certaine valeur seuil (OEPRMN, UEPRMN) de la différence (EPR error) est définie et que
- la différence (EPR error) est comparée avec la valeur seuil (OEPRMN, UEPRMN) ; et que
- l'accélération ou la décélération d'un arbre haute pression du moteur est mesurée comme second paramètre de régulation (N2dot) et
- qu'une certaine valeur seuil (ON2DMN, UN2DMN) du second paramètre de régulation (N2dot) est définie et que
- cette valeur seuil est comparée avec le second paramètre de régulation (N2dot) dépendant du moteur ; et sachant que pour éviter une détection d'erreurs erronée
- les valeurs seuils (OEPRMN, UEPRMN, ON2DMN, UN2DMN) sont limitées à une certaine grandeur pour éviter des perturbations dues au bruit de fond des signaux ; et
- qu'un pompage du moteur est détecté et qu'un résultat de mesure en découlant est éliminé ; et
- qu'en cas de dépassement vers le haut de la valeur seuil du premier ou du second paramètre de régulation accompagné du dépassement vers le bas de la valeur seuil de l'autre paramètre de régulation, une perte de la capacité de régulation de la poussée est signalée.

2. Logique de détection d'erreurs selon la revendication nº 1, **caractérisée en ce que** la valeur seuil de l'erreur du rapport de pression dans le moteur s'élève à environ + ou -0,15 et que la valeur seuil de l'accélération de l'arbre haute pression en tant que second paramètre de régulation s'élève à environ + ou -0,1 %/s, sachant que EPRerror > 0,15 et un N2dot < 0,1 %/s constaté simultanément détectent une trop faible poussée lors d'une accélération intentionnelle, et que EPRerror < -0,15 et un N2dot> -0,1 %/s constaté simultanément détectent une poussée trop élevée lors d'une décélération intentionnelle.

3. Logique de détection d'erreurs selon la revendication nº 1, **caractérisée en ce qu'**en cas de détection d'un pompage du moteur (SRGDET), le résultat de la comparaison simultanée du premier et du second paramètre de régulation avec la valeur seuil correspondante est écrasé par un argument logique « false » pour éviter une perturbation de la détection de la perte de la capacité de régulation de la poussée due à un pompage du moteur.
